# EUROPÄISCHE PATENTSCHRIFT

(11) **EP 1 298 372 B1**
(45) Veröffentlichungstag und Bekanntmachung des Hinweises auf die Patenterteilung: **12.04.2006**
(21) Anmeldenummer: 02021731.1
(22) Anmeldetag: 25.09.2002
(51) Int. Cl.: F16K 37/00

(54) **Diagnosesystem für Schaltventile**
Diagnostic system for a switching valve
Système de diagnostique pour une soupape de commutation

(30) Priorität: 26.09.2001 DE 10147326
(43) Veröffentlichungstag der Anmeldung: 02.04.2003
(73) Patentinhaber: Bürkert GmbH & Co. KG, 01900 Grossröhrsdorf (DE)
(72) Erfinder: Ellwein, Christian, 74523 Schwäbisch Hall (DE); Hentschel, Dieter, 01326 Dresden (DE); Fröhlich, Klaus-Jochen, 01326 Dresden (DE); Reppe, Günter, 01454 Radeberg (DE)
(74) Vertreter: Degwert, Hartmut

(56) Entgegenhaltungen:
- EP-A- 0 467 555
- US-A- 5 159 835
- US-A- 5 327 783
- PATENT ABSTRACTS OF JAPAN vol. 007, no. 230 (M-249), 12. Oktober 1983 (1983-10-12) & JP 58 121384 A (MITSUBISHI JUKOGYO KK), 19. Juli 1983 (1983-07-19)

## Beschreibung

### HINTERGRUND DER ERFINDUNG

### 1. Gebiet der Erfindung

Die vorliegende Erfindung bezieht sich im allgemeinen auf ein Diagnosesystem für Magnetventile und insbesondere auf die Adaptierung eines Sensors zur Aufnahme akustischer Signale oder Schwingungen. Insbesondere befaßt sich die vorliegende Erfindung mit der mechanischen und elektrischen Adaption, Montage und Beschaltung eines Beschleunigungssensors an einem Schaltventil.

### 2. Beschreibung des Standes der Technik

Zur Überwachung und Diagnose von Ventilen im Sinne einer Fehlererkennung oder Fehlerfrüherkennung werden in der Literatur verschiedene Verfahren und Techniken vorgeschlagen. Diese Patentanmeldung bezieht sich nur auf Diagnosesysteme für sogenannte Schaltventile für Gase, Flüssigkeiten, körnige oder pulverförmige Feststoffe oder ähnliche Medien, das heißt für Ventile, die zwischen zwei oder mehreren diskreten Positionen schalten und die durch Magnetkraft, piezoelektrische Kräfte, pneumatische Kräfte oder ähnliche Verfahren angetrieben werden. Insbesondere bezieht sich die Erfindung auf Ventile, die zur Ansteuerung einen elektrischen Strom oder eine elektrische Spannung benötigen.

In [1] werden folgende Größen als mögliche Diagnoseparameter genannt: der elektrische Widerstand der Magnetspule, die Leistungsaufnahme der Magnetspule, die Temperatur des Schaltventils, die Schaltzeit des Ventils, der Durchfluss durch das Ventil, die Leckage des Ventils, die Geräuschentwicklung durch das Ventil. Das Geräusch und die Schwingungen beim Schalten eines Rückschlagventils werden auch in [2] als geeignetes Signal zur Fehlererkennung genannt. In dieser Druckschrift werden als geeignete Positionen für die Montage des Beschleunigungssensors der Ventilkörper selber (das heißt die Einheit des Ventils, die den Ventilsitz beinhaltet) oder das Scharnier der Rückschlagklappe im Ventil genannt. In der US Patentanmeldung 5.889.405 wird ein weiteres Verfahren zur Diagnose von Magnetventilen beschrieben, das die charakteristische Form des elektrischen Stroms durch die Magnetspule beim Schalten des Ventils auswertet. Die Form des Stroms ist bedingt durch die Änderung der Induktivität *L* und des Scheinwiderstandes *Z* durch die Bewegung des schließenden Elements (Kern, Wippe, Klappe oder ähnliches) im Magnetkreis des Ventils. Die Schaltzeit und die Form des elektrischen Stroms werden auch in der US Patentanmeldung 5.787.937 als zu überwachende Signale für eine Fehlererkennung bei Magnetventilen angegeben. Die Patentschrift US 4.205.307 stützt sich auf ein Verfahren zur Diagnose von Magnetventilen, das den aktuellen Zeitwert des elektrischen Stroms durch die Magnetspule und den bisherigen Spitzenwert des elektrischen Stroms durch die Magnetspule zur Überwachung verwendet. In der Patentschrift DE 197 42 038 wird ein Verfahren zur Diagnose von Ventilen vorgestellt bei dem die Ventilspule mit einem Pulsweitenmodulierten Signal (PWM) angesteuert und geregelt wird. Die resultierende Frequenz des PWM-Signals, die durch einen Regler bestimmt wird, dient als Größe der Diagnose. In [3] wird ein Verfahren zur Diagnose von Rückschlagventilen beschrieben, bei dem zwei Beschleunigungssensoren außen am Ventilkörper, jeweils nahe dem Scharnier der Rückschlagklappe und dem Austreffpunkt der Klappe angebracht sind. In [4] wird auch ein Verfahren zur Überwachung von Magnetventilen vorgestellt, das die Form des elektrischen Stroms durch die Magnetspule auswertet. [5] beschreibt ein Verfahren, bei dem zwei Ultraschallsensoren vor und hinter dem Ventil im Fluidkreis (das heißt am Eingang und am Ausgang des Ventils) angebracht werden, um Leckagen in Ventilen zu erkennen. Das Differenzsignal beider Sensoren kann ausgewertet werden, um Lecks innerhalb des Ventils zu erfassen. In [6] wird die Analyse von mechanischen Schwingungen am Ventil und den damit verbundenen Rohrleitungen als geeignetes Mittel zur Erkennung von Lecks und Undichtheiten beschrieben. Als Sensor wird ein Beschleunigungssensor eingesetzt. Der Sensor wird entweder an den ans Ventil angeschlossenen Rohrleitungen oder am Ventilkörper angebracht. In dieser Arbeit werden die resultierenden Signale untersucht. [7] stellt ein Verfahren vor, das einen Ultraschallsender und einen Ultraschallempfänger einsetzt. Beide sind am Ventilgehäuse befestigt. Der Sender sendet eine Folge von kurzen Impulsen in das Ventil. Die reflektierten Impulse werden vom Sensor aufgenommen und zur Fehlererkennung ausgewertet.

Aus der US-A-5,159,835 ist ein System zur Schwingungsmessung an einem Schaltventil bekannt, bei dem an der Außenseite des Ventilgehäuses ein akustischer Wandler zur Schwingungsmessung angebracht ist. Die erfaßten Schwingungen dienen zur Ermittlung der Position und der Bewegungsbahn des Ventiltellers.

Aus der US-A-5,327,783 ist ein System zur Schwingungsmessung an einem Schaltventil bekannt, bei dem an der Außenseite des Ventilgehäuses ein Beschleunigungssensor und ein Ultraschallwandler angebracht sind. Durch dieses kombinierte System kann beispielsweise die Position des Ventiltellers während des Öffnens bzw. Schließens des Ventils, die Vibrationsfrequenz des Ventiltellers, Hohlraumbildung im fließenden Medium und eventuelle Defekte im Schließventil ermittelt werden.

### ZUSAMMENFASSUNG DER ERFINDUNG

Es ist Ziel der vorliegenden Erfindung, eine neuartige Adaption eines akustischen Sensors zu beschreiben, wobei der Sensor ein Beschleunigungssensor, Mikrophon oder ähnliches sein kann. Diese neuartige Integration des Sensors mit dem Ventil bezieht sich in einem ersten Aspekt darauf, dass der Sensor nicht am Ventilkörper oder an den angeschlossenen Rohrleitungen montiert ist, sondern dass er an oder in die sogenannte Gerätesteckdose integriert wird. Die Gerätesteckdose ist ein Stecker zur elektrischen Kontaktierung des Ventils bzw. der Magnetspule. Sie wird an das, dem Ventil zugewandte Ende der elektrischen Zuleitung z. B. durch Schrauben oder Löten, montiert. Der Antrieb des Ventils, z. B. die Magnetspule, hat ein zur Gerätesteckdose passendes elektrisches Gegenstück aus elektrischen Kontakten, die mit der Spulenwicklung und gegebenenfalls dem Schutzleiter verbunden sind. Die Gerätesteckdose wird über eine geeignete mechanische Verbindung mit dem Ventil beziehungsweise der Magnetspule verbunden. Der Sensor zur Überwachung des Magnetventils kann entweder in geeigneter geometrischer Form in die Gerätesteckdose integriert werden, oder aber er wird an dem Gehäuse der Gerätesteckdose befestigt. Das Gehäuse der Gerätesteckdose ist in diesem Zusammenhang das Behältnis, das die elektrischen Kontakte, Anschlüsse und Kabel der Gerätesteckdose umfasst. Es kann einen oder mehrere Durchbrüche haben, um elektrische Kabel in die Gerätesteckdose einzuführen bzw. um den elektrischen Anschluss der Gerätesteckdose an das Ventil zu ermöglichen.

Gemäß eines zweiten Aspekts der vorliegenden Erfindung kann die neuartige Befestigung des Sensors an der Gerätesteckdose auch eine Veränderung des zu messenden Schwingungssignals durch geeignete mechanische Filter beinhalten. Ein derartiger Filter kann zum Beispiel eine Zwischenschicht zwischen Sensor und Gerätesteckdose aus einem geeigneten Elastomer sein, um die Amplituden der Schwingung zu dämpfen oder bestimmte Frequenzbereiche zu unterdrücken.

Wesentliche Vorteile der beschriebenen Erfindung gegenüber dem Stand der Technik sind, dass die elektrische Kontaktierung des Sensors zur Energieversorgung und zur Datenübertragung in der Gerätesteckdose wesentlich einfacher und weniger störanfällig ist als an allen anderen Stellen des Ventils oder der Rohrleitungen. Darüber hinaus werden extern am Ventil verlaufende Kabel und elektrische Verbindungen vermieden, die eine erhebliche Gefahr der Beschädigung des Meßsystems beinhalten würden.

Alle oben beschriebenen Verfahren und Ansätze integrieren den Messwertaufnehmer am Ventilgehäuse und erfordern somit eine externe Kontaktierung des Sensors oder ein wesentlich aufwendigeres Ventilgehäuse mit integrierten Wegen für die elektrischen Verbindungen. Es hat sich gezeigt, dass die gemessenen Schwingungssignale an der Gerätesteckdose ausreichend gut sind, um eine Fehlererkennung und Diagnose zu realisieren.

Die im Stand der Technik beschriebenen Diagnoseverfahren, die auf einer Auswertung des Stroms durch die Magnetspule oder anderer elektrischer Größen basieren, haben den wesentlichen Nachteil, daß viele Fehler und Schäden am überwachten Ventil nicht genügend erkannt werden können, weil sie keinen Einfluß auf die genannten elektrischen Größen haben. Zu diesen nicht erkennbaren Fehlern gehört zum Beispiel ein Verschleiß der Ventildichtung, der den Strom durch die Spule des Ventils nicht beeinflußt, der jedoch die akustische Signatur des Schaltvorgangs merklich verändert.

### KURZE BESCHREIBUNG DER ZEICHNUNGEN

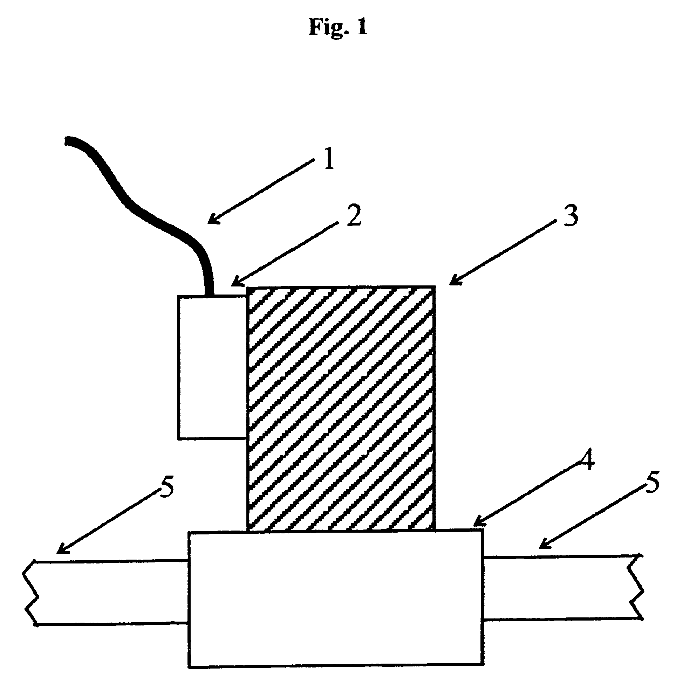

- Figur 1 ist eine schematische Ansicht eines elektrisch betriebenen Schaltventils;
- Figur 2 zeigt die Integration des Sensors an die Gehäusewand der Gerätesteckdose;
- Figur 3 zeigt die Integration eines scheibenförmigen Sensors in der Gerätesteckdose; und
- Figur 4 zeigt die Integration eines mechanischen Filters zwischen Sensor und Gerätesteckdose.

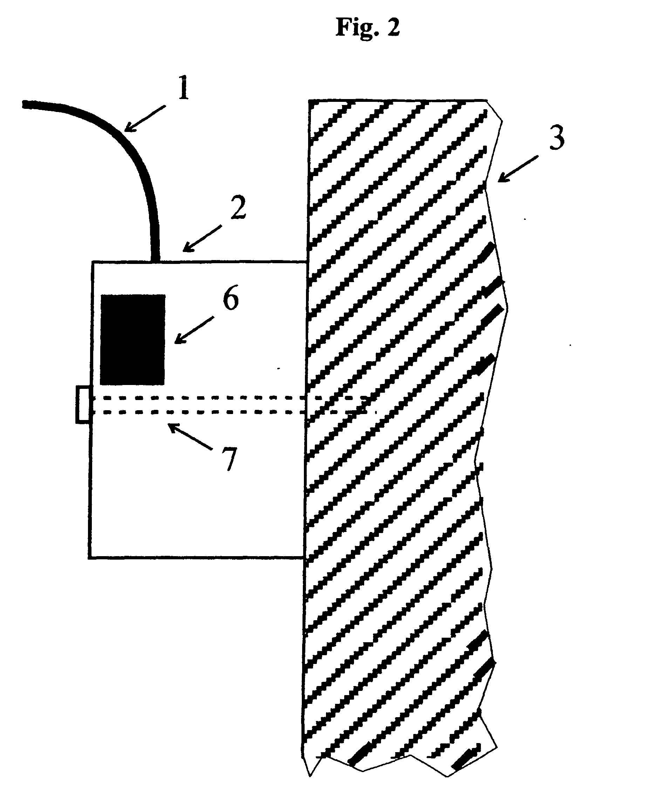

Das geschaltete Medium wird in Rohrleitungen 5 zum Ventil hingeführt und vom Ventil weggeführt. Im Ventilkörper 4 findet der eigentliche Schaltvorgang statt, der Wege im Ventil für das geschaltete Medium öffnet oder schließt. Ein Antrieb 3 liefert die nötige Kraft für diesen Schaltvorgang. Der Antrieb kann beispielsweise als Elektromagnet mit einer integrierten Rückstellfeder ausgeführt werden. Die Dimensionierung und die konstruktive Gestaltung des Antriebs sind nicht Inhalt dieser Erfindung und werden deswegen an dieser Stelle nicht weiter vertieft. Eine Anschlußdose bzw. ein Steckergehäuse, im folgenden als Gerätesteckdose 2 bezeichnet, kann elektrisch und mechanisch mit dem Antrieb verbunden werden und dient zur elektrischen Ansteuerung bzw. Versorgung des Antriebs. Die Verbindung der Gerätesteckdose mit dem Antrieb ist in den meisten Ausführungsfällen lösbar, was zum Beispiel durch Verbindung beider Komponenten (Antrieb und Gerätesteckdose) mittels einer Schraube **7** (Fig. 2) realisiert wird. Die Gerätesteckdose **2** hat eine elektrische Zuleitung **1** (beispielsweise ein Kabel), die mit einem geeigneten elektrischen Netz bzw. einer geeigneten elektrischen Quelle und gegebenenfalls einer geeigneten elektrischen Steuereinrichtung (zum Beispiel ein Schalter oder ähnliches) verbunden wird. In die oder an der Gerätesteckdose 2 ist ein Sensor zur Messung der bei Ventilbetätigung erzeugten Schwingungen integriert.

In **Fig. 2** ist eine mögliche Befestigung eines Sensors **6** an dem Gehäuse gezeigt. Die hier gezeigte Darstellung ist exemplarisch und zeigt nur einen Ausführungsfall der Erfindung. Der Sensor **6** ist nicht zwingend von der hier gezeigten rechteckigen Form. Er kann beispielsweise auch zylinderförmig oder als komplexe Bauform wie eine Integrierte Schaltung (IC) oder in einer anderen geeigneten Bauform ausgeführt sein. Auch die Position des Sensors ist nicht zwingend an der hier gezeigten Stelle. In **Fig. 2** wird als wesentlicher Aspekt gezeigt, daß der Sensor mit dem Gehäuse der Gerätesteckdose derart mechanisch verbunden ist, daß die Schwingungen des Ventils beim Schalten oder zwischen zwei Schaltvorgängen vom Sensor aufgenommen werden. Er kann sowohl innen in der Gerätesteckdose als auch außen an der Gerätesteckdose befestigt werden. Als Befestigung kommen alle geeigneten Verfahren wie Kleben, Schrauben, Klemmen, Nieten oder ähnliches in Frage. Der Sensor kann auch durch einen Magneten an einer magnetischen Stelle der Gerätesteckdose gehalten werden.

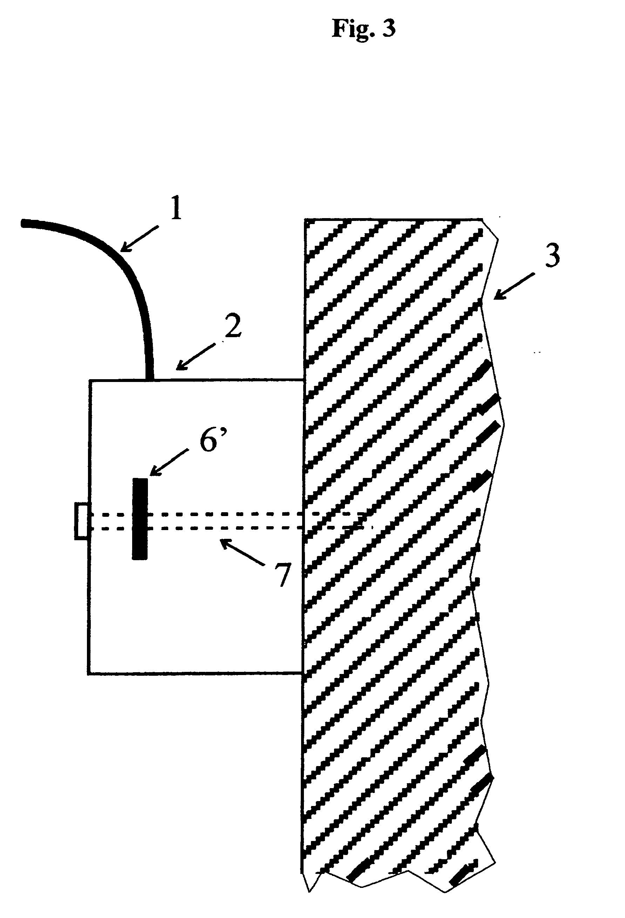

**Fig. 3** zeigt einen scheibenförmig ausgeführten Sensor **6'** zur Schwingungsmessung, der in der Gerätesteckdose **2** integriert ist. Da die mechanischen Schwingungen beim Schalten oder zwischen den Schaltvorgängen des Ventils hauptsächlich über die Verschraubung **7** zwischen Antrieb und Gerätesteckdose übertragen werden, kann der Sensor **6'** auch als Scheibe mit Innenloch ausgeführt sein und in der Gerätesteckdose an die Schraube 7 integriert werden. Dabei muß eine geeignete Übertragung der zu messenden Signale und eine geeignete Einkopplung der Signale in den Sensor konstruktiv sichergestellt werden. Diese konstruktiven Maßnahmen (Kontaktflächen, Verbindungen...) sind sehr stark abhängig von der jeweiligen Ausführung der Gerätesteckdose und werden in **Fig. 3** nicht gezeigt.

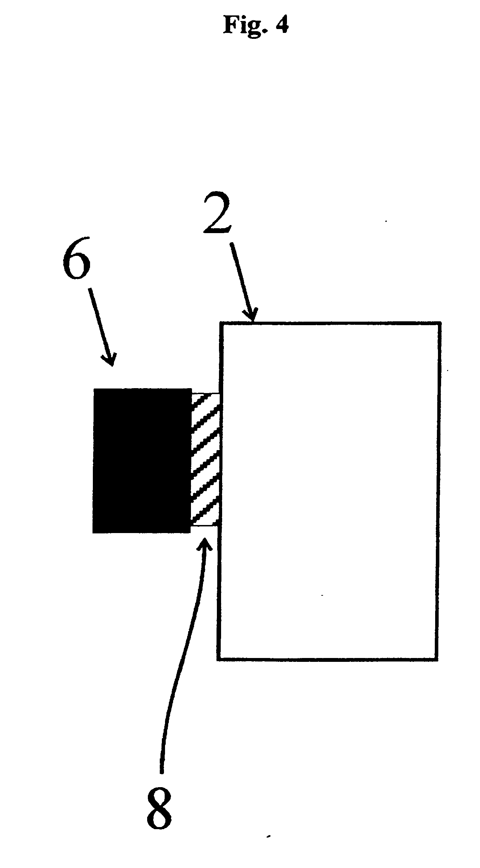

In **Fig. 4** ist ein mechanischer Filter **8** zwischen der Gerätesteckdose **2** und dem Sensor **6** angebracht. Dieser Filter kann zum Beispiel eine Scheibe aus einem geeigneten Elastomer sein. Er dient dazu, sowohl die Frequenz als auch die Amplitude der auftretenden Schwingungen zu beeinflussen und an den Meßbereich des Sensors anzupassen.

### ZITIERTE DRUCKSCHRIFTEN

Im folgenden sind die in dieser Patentschrift zitierten Druckschriften aufgeführt:
[1] Kryter, Robert C.: Nonintrusive methods for monitoring the operational readiness of solenoid-operated valves; Nulcear Engineering and Design; 1990; S. 409 - 417
[2] Diquemare, Pascal: Improved diagnostics is the key to predictive maintenance of valves; Nuclear Engineering International; April 1997; S. 34 - 36
[3] Uhrig, Robert E.; Tsoukalas, Lefteri, H.; Ikonomopoulos, Andreas; Essawy, Magdi; Black, Christopher; Yancy, Seth: Using neural networks to monitor the operability of check valves; Proceedings of the Conference on Expert System Applications for the Electric Power Industry; Phoenix, Arizona; 8.-10.12.1993
[4] Blakeman, E.D.; Kryter, R.C.: Noninvasive testing of solenoid-operated valves using transient current signature analysis; International Conference on Maintenance and Reliability; Knoxville Tenessee; 20.-22.5.1997
[5] Dimmick, Josef G.; Cobb, John M.: Ultrasonic leak detection cuts valve maintenance costs; Power enigneering; August 1986; S. 35 - 38
[6] Thompson, G.; Zoliewski, G.: An experimental investigation into the detection of internal leakage of gases through valves by vibration analysis; Proceedings of the Institution of Mechanical Engineers Part E; 1997; S. 195-207
[7] Au-Yang, M. K.; Ataman, V. T.; Key, M. W.: A non-intrusive check valve monitoring system using ultrasonic and acoustic techniques; International Power Generation Conference; San Diego, CA; 6.-10.10.1991

## Patentansprüche

1. Diagnosesystem für Schaltventile, bei dem die beim Schaltvorgang erzeugten mechanischen Schwingungen erfaßt werden, insbesondere der Körperschall, mit einem Sensorelement (6, 6') zur Schwingungsmessung und mit einer am Schaltventil integrierten Gerätesteckdose (2), wobei das Sensorelement (6, 6') in die oder an die Gerätesteckdose (2) integriert ist.

2. Diagnosesystem nach Patentanspruch 1, wobei das Sensorelement als Scheibe (6') ausgebildet ist, durch die eine Befestigungsschraube (7) für die Gerätesteckdose (2) geführt ist.

3. Diagnosesystem nach Patentanspruch 2, wobei das Sensorelement (6') mit der Gerätesteckdose (2) durch ein Verfahren wie Kleben, Klemmen, Stecken, Schrauben, Nieten oder magnetische Haftverfahren verbunden ist.

4. Diagnosesystem nach einem oder mehreren der Patentansprüche 1 bis 3, wobei das Sensorelement (6, 6') piezoelektrisch, piezoresistiv oder kapazitiv ausgebildet ist.

5. Diagnosesystem nach einem oder mehreren der Patentansprüche 1 bis 4, wobei das Sensorelement (6, 6') zusammen mit geeigneter Elektronik zur Signalvorverarbeitung, insbesondere Ladungsverstärkung, Spannungsverstärkung, Stromverstärkung, Meßbrücken, Filtern, Analog-Digital-Wandlern oder ähnlichem, in unmittelbarer räumlicher Nähe auf einem gemeinsamen Trägersubstrat ausgebildet ist.

6. Diagnosesystem nach einem oder mehreren der Patentansprüche 1 bis 5, wobei das Sensorelement (6) an der Gerätesteckdose (2) angebracht ist.

7. Diagnosesystem nach einem oder mehreren der Patentansprüche 1 bis 6, wobei zwischen dem Sensorelement (6) und der Gerätesteckdose (2) eine Dämpfungsschicht (8) angebracht ist.

8. Diagnosesystem nach einem oder mehreren der Patentansprüche 1 bis 7, wobei die Energieversorgung des Sensorelements (6, 6') über die Energieversorgung des Ventils (3, 4) erfolgt.

9. Diagnosesystem nach einem oder mehreren der Patentansprüche 1 bis 8, wobei die Auskopplung der Meßwerte des Sensorelements (6, 6') durch eine geeignete Modulation über die Energieversorgung des Ventils (3, 4) erfolgt.

10. Diagnosesystem nach Patentanspruch 9, wobei die Auskopplung der Meßwerte des Sensorelements (6, 6') über von der Energieversorgung getrennt ausgeführte Datenleitungen erfolgt.

11. Diagnosesystem nach einem oder mehreren der Patentansprüche 1 bis 10, wobei die Auswertung der Meßwerte in der Gerätesteckdose (2) erfolgt.

12. Diagnosesystem nach Patentanspruch 11, wobei die Auswertung der Meßwerte räumlich abgesetzt von der Gerätesteckdose (2) erfolgt.

## Claims

1. A diagnostic system for switching valves, in which the mechanical vibrations, in particular structure-borne sound, generated in the switching process are detected, comprising a sensor element (6, 6') for vibration measurement and an instrument socket (2) integrated on the switching valve, the sensor element (6, 6') being integrated in or on the instrument socket (2).

2. The diagnostic system according to claim 1, in which the sensor element is configured as a disk (6') through which a fastening screw (7) for the instrument socket (2) is passed.

3. The diagnostic system according to claim 2, in which the sensor element (6') is connected to the instrument socket (2) by a method such as gluing, clamping, inserting, screwing, riveting, or by magnetic adhesion methods.

4. The diagnostic system according to one or more of claims 1 to 3, in which the sensor element (6, 6') is made to be piezoelectric, piezoresistive or capacitive.

5. The diagnostic system according to one or more of claims 1 to 4, in which the sensor element (6, 6') is configured on a shared carrier substrate along with appropriate electronics for signal preprocessing, in particular charge amplification, voltage amplification, current amplification, measuring bridges, filters, analog-to-digital converters or the like, in the immediate spatial vicinity therewith.

6. The diagnostic system according to one or more of claims 1 to 5, in which the sensor element (6) is mounted to the instrument socket (2).

7. The diagnostic system according to one or more of claims 1 to 6, in which a damping layer (8) is fitted between the sensor element (6) and the instrument socket (2).

8. The diagnostic system according to one or more of claims 1 to 7, in which the power supply to the sensor element (6, 6') is effected by means of the power supply of the valve (3, 4).

9. The diagnostic system according to one or more of claims 1 to 8, in which the measured values of the sensor element (6, 6') are decoupled by an appropriate modulation using the power supply of the valve (3, 4).

10. The diagnostic system according to claim 9, in which the measured values of the sensor element (6, 6') are decoupled via data lines configured separately from the power supply.

11. The diagnostic system according to one or more of claims 1 to 10, in which the measured values are evaluated in the instrument socket (2).

12. The diagnostic system according to claim 11, in which the measured values are evaluated spatially remote from the instrument socket (2).

## Revendications

1. Système de diagnostic pour valves de commutation, dans lequel sont détectées des vibrations mécaniques engendrées au cours du processus de commutation, en particulier les bruits de structure, comprenant un élément capteur (6, 6') pour mesurer les vibrations et un connecteur d'appareil intégré à la valve de commutation, l'élément capteur (6, 6') étant intégré dans ou sur le connecteur d'appareil (2).

2. Système de diagnostic selon la revendication 1, dans lequel l'élément capteur est réalisé sous forme de disque (6') à travers lequel passe une vis de fixation (7) pour le connecteur d'appareil (2).

3. Système de diagnostic selon la revendication 2, dans lequel l'élément capteur (6') est relié au connecteur d'appareil (2) par un procédé tel que le collage, le serrage, l'enfichage, le vissage, le rivetage ou par procédé d'adhérence magnétique.

4. Système de diagnostic selon l'une ou plusieurs des revendications 1 à 3, dans lequel l'élément capteur (6, 6') est réalisé piézoélectrique, piézorésistif ou capacitif.

5. Système de diagnostic selon l'une ou plusieurs des revendications 1 à 4, dans lequel l'élément capteur (6, 6'), conjointement avec un système électronique adapté au traitement préalable de signaux, en particulier à l'amplification de charge, à l'amplification de tension, à l'amplification de courant, et avec des ponts de mesure, des filtres, des convertisseurs analogiques-numériques ou similaires, est réalisé à proximité spatiale directe de ceux-ci sur un substrat porteur.

6. Système de diagnostic selon l'une ou plusieurs des revendications 1 à 5, dans lequel l'élément capteur (6) est monté sur le connecteur d'appareil (2).

7. Système de diagnostic selon l'une ou plusieurs des revendications 1 à 6, dans lequel entre l'élément capteur (6) et le connecteur d'appareil (2) est appliquée une couche amortisseuse (8).

8. Système de diagnostic selon l'une ou plusieurs des revendications 1 à 7, dans lequel l'alimentation en énergie de l'élément capteur (6, 6') a lieu via l'alimentation en énergie de la valve (3, 4).

9. Système de diagnostic selon l'une ou plusieurs des revendications 1 à 8, dans lequel le découplage des valeurs mesurées de l'élément capteur (6, 6') a lieu au moyen d'une modulation appropriée via l'alimentation en énergie de la valve (3, 4).

10. Système de diagnostic selon la revendications 9, dans lequel le découplage des valeurs mesurées de l'élément capteur (6, 6') a lieu via des lignes de données réalisées séparément de l'alimentation en énergie.

11. Système de diagnostic selon l'une ou plusieurs des revendications 1 à 10, dans lequel l'évaluation des valeurs mesurées a lieu dans le connecteur d'appareil (2).

12. Système de diagnostic selon la revendication 11, dans lequel l'évaluation des valeurs mesurées a lieu à distance spatiale du connecteur d'appareil (2).
